## Europäisches Patentamt

## European Patent Office

## Office européen des brevets

(11) Veröffentlichungsnummer: **0 134 886**
**B1**

(12) **EUROPÄISCHE PATENTSCHRIFT**

(45) Veröffentlichungstag der Patentschrift: 09.11.88

(21) Anmeldenummer: 84104697.2

(22) Anmeldetag: 26.04.84

(51) Int. Cl.⁴: **H 04 Q 3/62,** H 04 M 3/50, H 04 M 3/06, H 04 M 1/00, H 04 Q 1/39

(54) **Schaltungsanordnung zur Uebertragung von Signalisierinformationen vom öffentlichen Fernsprechnetz zu Teilnehmerstellen einer Fernmelde-, insbesondere Fernsprechnebenstellenanlage.**

(30) Priorität: 24.08.83 CH 4611/83

(43) Veröffentlichungstag der Anmeldung:
27.03.85 Patentblatt 85/13

(45) Bekanntmachung des Hinweises auf die Patenterteilung:
09.11.88 Patentblatt 88/45

(84) Benannte Vertragsstaaten:
CH LI NL

(56) Entgegenhaltungen:
DE-A-3 112 549
FR-A-2 195 132
US-A-4 140 882

NATIONAL TELECOMMUNICATIONS CONFERENCE, Band 3/4, 29. November-3. Dezember 1981, New Orleans, Louisiana, US, Seiten F3.3.1-F3.3.4, IEEE, New York, US; G.H. JUD et al.: "A modern integrated PABX with centralized message recording and remote distribution"

(73) Patentinhaber: SIEMENS-ALBIS AKTIENGESELLSCHAFT
EGA1/Verträge und Patente Postfach
CH-8047 Zürich (CH)

(72) Erfinder: Weisigk, Günther
Lärchenstrasse 32
CH-8903 Birmensdorf (CH)
Erfinder: Rippstein, Eugen
Brunnenzelgstrasse
CH-8904 Aesch (CH)

**Beschreibung**

Die vorliegende Erfindung betrifft eine aus der DE—A—31 12 549 bekannte Schaltungsanordnung gemäss dem Oberbegriff des Patentanspruches 1.

Moderne Fernmeldeanlagen werden laufend mit neuen Diensten versehen, die dem Benützer immer mehr Komfort und rationellere Kommunikationsmöglichkeiten bieten sollen. So schafft beispielsweise der Einsatz modernster Speichermittel die Möglichkeit, dass zwei Benützer einer Fernmeldeanlage nicht nur über eine räumliche Entfernung miteinander kommunizieren können, sondern dass die Kommunikation auch mit zeitlicher Verschiebung stattfinden kann. Diese vor allem im Geschäftsverkehr interessante Möglichkeit bietet der sogenannte Voice-Mail-Dienst. Diesem liegt eine in einer Vermittlungsstelle des öffentlichen Fernsprechnetzes angeordnete Einrichtung zugrunde, die es einem Teilnehmer erlaubt, eine für einen momentan nicht erreichbaren anderen Teilnehmer bestimmte Sprachnachricht zu einem an sich beliebigen Zeitpunkt von seiner Teilnehmerstelle aus in das Fernsprechsystem einzugeben, worauf der andere Teilnehmer die Nachricht zu einem späteren Zeitpunkt über seine Teilnehmerstelle erfahren kann. Dieser Teilnehmer muss zweckmässigerweise in irgend einer Art und Weise darauf aufmerksam gemacht werden, dass eine wartende Nachricht vorliegt, damit er diese bei nächster Gelegenheit abfragen kann.

Der vorliegenden Erfindung liegt daher die Aufgabe zugrunde, eine Anordnung zu schaffen, die in einfacher Weise ermöglicht, zu einem beliebigen Zeitpunkt vom öffentlichen Fernsprechnetz her Signalisierinformationen zu gewünschten Teilnehmerstellen einer Fernsprechnebenstellenanlage zu übertragen, dort zu empfangen und in den betreffenden Teilnehmerstellen entsprechende Anzeigeorgane zu aktivieren. Die Lösung dieser Aufgabe gelingt erfindungsgemäss durch die im Kennzeichen des Anspruchs 1 angegebenen Massnahmen.

Wie die nachfolgenden Ausführungen zeigen, erfordert diese Lösung nur wenige und relativ einfache Eingriffe in einer bereits bestehenden Fersprechnebenstellenanlage.

Ein Ausführungsbeispiel der Erfindung wird nachstehend anhand von Zeichnungen näher erläutert. Es zeigt:

Fig. 1 den Aufbau einer Fernsprechnebenstellenanlage, zu deren Teilnehmerstellen eine erfindungsgemässe Signalisierung möglich sein soll,

Fig. 2 Einzelheiten der erfindungsgemässen Anordnung

Fig. 3 Einzelheiten zur Signalisierung in einer Teilnehmerstelle.

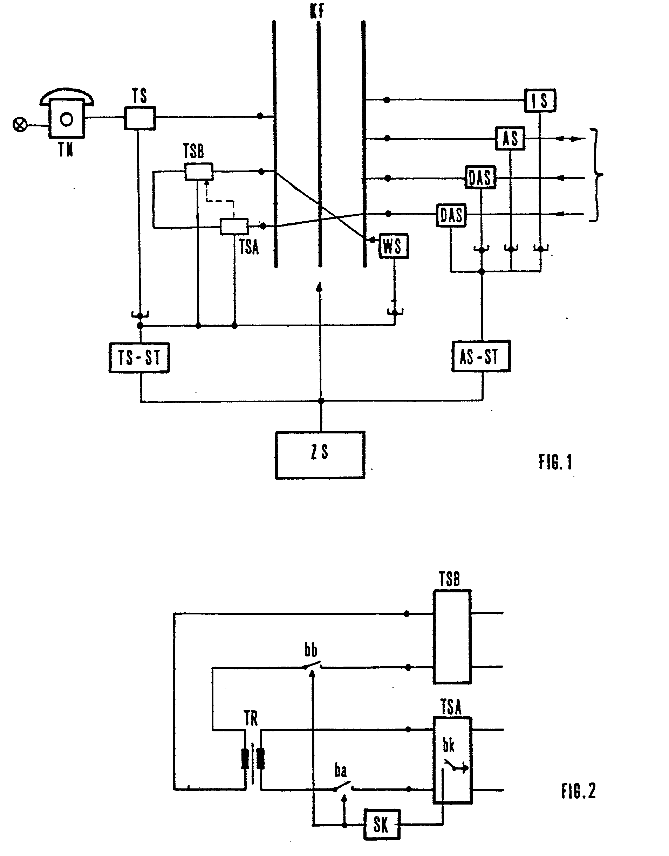

Fig. 1 stellt in einem Blockschaltbild nur diejenigen Teile einer Fernsprechnebenstellenanlage dar, die im Zusammenhang mit der Erfindung von Bedeutung sind. Auf der einen Seite eines mehrstufigen Koppelnetzwerkes KF, über das die Sprechwege aufgebaut werden, sind Teilnehmerstellen TN über zugehörige Teilnehmeranschlussschaltungen TS — im folgenden auch Teilnehmerschaltung genannt — angeschlossen. Es ist nur eine Teilnehmerstelle TN mit der zugehörigen Teilnehmerschaltung TS dargestellt. Die Einspeisung eines Rufsignals in eine Teilnehmerstelle TN erfolgt über deren Teilnehmerschaltung TS von einem Rufsignalgenerator aus, der vom Teilnehmersteuerwerk TS—ST gesteuert wird; nähere Erläuterungen hiezu finden sich weiter unten. Die über Zwischenleitungen miteinander verbundenen Koppelstufen können in bekannter Weise aus einer Mehrzahl von Koppelvielfachen bestehen. Auf der anderen Seite des Koppelnetzwerkes KF sind die Leitungssätze für den Verkehr zum öffentlichen Fernsprechnetz angeschlossen. Es sind dies Amtsverbindungssätze AS für den Verkehr von und zum öffentlichen Netz sowie Durchwahlamtssätze DAS, über die eine vom öffentlichen Fernsprechnetz ankommende Verbindung direkt, d.h. ohne Zwischenschaltung einer Vermittlungsperson in der Nebenstellenanlage, zur gewünschten Teilnehmerstelle TN der Nebenstellenanlage hergestellt werden kann. Die Anzahl der verschiedenen Leitungssätze AS, DAS entspricht der Anzahl der zum öffentlichen Fernsprechnetz führenden Amtsleitungen AL. Neben den für Amtsverkehr notwendigen Sätzen AS und DAS sind auf dieser Seite des Koppelnetzwerkes KF auch noch Internverbindungssätze IS zur Abwicklung des Verkehrs zwischen Teilnehmerstellen TN innerhalb der Nebenstellenanlage angeschlossen. Ferner ist mindestens eine Wahlaufnahmeeinrichtung WS zur Aufnahme der von eine Verbindung wünschenden internen Teilnehmern TN abgegebenen Wahlinformationen am Koppelnetzwerk KF angeschlossen. Die Steuerung der genannten Sätze für Intern- und Amtsverkehr erfolgt durch ein Satzsteuerwerk AS—ST, diejenige der Teilnehmerschaltungen TS durch ein Teilnehmersteuerwerk TS—ST. Ferner steuert das Teilnehmersteuerwerk TS—ST die Wahlaufnahmeeinrichtungen WS. Die erwähnten Steuerwerke sind mit einem zentralen Steuerwerk ZS verbunden, in dem u.a. die Bewertung der Wahlinformationen stattfindet und das auch die Wegesuche sowie die Durchschaltung der Sprechwege im Koppelnetzwerk KF vornimmt.

Wie erwähnt, besteht bei der dargestellten Fernsprechnebenstellenanlage die Möglichkeit der Durchwahl über die Durchwahlamtssätze DAS. Dies bedeutet, dass ein Teilnehmer des öffentlichen Fernsprechnetzes über eine Amtsleitung AL eine gewünschte Teilnehmerstelle TN der Nebenstellenanlage ohne Mitwirkung einer Abfragestelle in der Nebenstellenanlage erreichen kann. Bekanntlich werden für den Verkehr zwischen Vermittlungsstellen verschiedene Signalisierungsverfahren angewendet, wie beispielsweise die Gleichstromimpulswahl oder die Mehrfrequenzwahl. Für den Durchwahlverkehr muss die Nebenstellenanlage über Einrichtungen verfügen, die die vom angeschlossenen Amt eintreffenden Zeichen empfangen und auch die gegebenenfalls erforderlichen Quittungszeichen aussenden können. Im vorliegenden Fall sollen die Durchwahlamtssätze DAS unter Mitwirkung einer nicht dargestellten Einrichtung in der Lage sein, die Zeichen zu empfangen und unter Mitwirkung des Satzsteuerwerkes AS—ST dem zentralen Steuerwerk ZS zur Bewertung zuzuführen, das dann einen Verbindungsweg im Koppelnetzwerk KF vom belegten Leitungssatz zur gewünschten Teilnehmerstelle TN sucht und, wenn dieser frei ist, durchschaltet.

Das Satzsteuerwerk AS—ST fragt zyklisch aufeinanderfolgend den Belegungszustand der von ihm gesteuerten Leitungssätze ab. Wird nun ein Durchwahlamtssatz DAS über die angeschlossene Amtsleitung AL vom öffentlichen Fernsprechnetz her belegt, dann wird dies durch das Satzsteuerwerk AS—ST festgestellt. Die hierauf vom öffentlichen Fernsprechnetz eintreffenden Wahiziffern werden im Satzsteuerwerk AS—ST gespeichert. Sobald genügend Ziffern vorliegen, signalisiert der Durchwahlamtssatz DAS Wahlschluss in Richtung öffentliches Fernsprechnetz und die genannte Einrichtung zum Empfang der Zeichen wird weggeschaltet. Das Satzsteuerwerk AS—ST veranlasst über das zentrale Steuerwerk ZS die Bewertung der gespeicherten Ziffern. Ist die gewünschte Teilnehmerstelle TN frei, wird vom zentralen Steuerwerk ZS ein Koppelweg zwischen dem Durchwahlamtssatz DAS und dem betreffenden Teilnehmeranschluss gesucht und ein Rufsignal zu dieser Teilnehmerstelle TN angelegt. Der Durchwahlamtssatz DAS sendet gleichzeitig einen Rufkontrollton in Richtung öffentliches Fernsprechnetz. Meldet sich der gerufene Teilnehmer, werden das Rufsignal und der Rufkontrollton abgeschaltet und der Sprechweg durchgeschaltet.

Es sei nun angenommen, die gerufene Teilnehmerstelle TN melde sich nicht oder sei dauernd besetzt. Bietet das benützte öffentliche Fernsprechnetz den eingangs erwähnten Voice-Mail-Dienst, dann hat der rufende Teilnehmer nun die Möglichkeit, seine für die Teilnehmerstelle TN der Fernsprechnebenstellenanlage bestimmte Sprachnachricht in einer Voice-Mail-Box, die normalerweise in einer Vermittlungsstelle des öffentlichen Fernsprechnetzes vorgesehen ist, zu hinterlassen. Es wird dabei natürlich vorausgesetzt, dass der gerufene Teilnehmer berechtigt ist, Nachrichten aus dieser Box abzufragen. Sobald die Nachricht vom rufenden Teilnehmer in die Box eingegeben worden ist, ist es wünschenswert, dass der Teilnehmer der Teilnehmerstelle TN, für den die Nachricht bestimmt ist, über das Vorliegen der wartenden Nachricht informiert wird. Dies geschieht zweckmässigerweise durch Aktivierung einer optischen und/oder akustischen Anzeige beim betreffenden Teilnehmerapparat. Der Teilnehmer kann dann zu einem beliebigen Zeitpunkt den für ihn bestimmten inhalt der Voice-Mail-Box abfragen.

Es besteht nun das Problem, eine entsprechende Signalisierung "Nachricht wartet" ohne grossen Aufwand bis zur betreffenden Teilnehmerstelle TN zu bringen. Wie bereits erwähnt, wird die im Zuge eines normalen Verbindungsaufbaus gemeinsam mit dem belegten Durchwahlamtssatz DAS herangezogene Einrichtung zum Empfang der vom Amt eintreffenden Zeichen wieder weggeschaltet, sobald genügend Wahlziffern eingetroffen sind. Es ist daher nicht ohne weiteres möglich, nach Abschluss der eigentlichen Wählphase noch weitere Informationen, wie z.B. die Signalisierung "Nachricht wartet" zur gewünschten Teilnehmerstelle TN zu senden, da in der Fernsprechnebenstellenanlage zu diesem Zeitpunkt keine Einrichtung mehr angeschaltet ist, die diese Informationen empfangen und weiterverarbeiten könnte.

Hier schaffen nun die erfindungsgemässen Massnahmen in einfacher Weise Abhilfe. Hiezu sind am Koppelnetzwerk KF neben den in üblicher Weise den angeschlossenen Teilnehmerstellen TN zugehörigen Teilnehmerschaltungen TS zwei weitere Teilnehmerschaltungen TSA und TSB angeschlossen, denen keine eigentliche Teilnehmerstelle zugeordnet ist, sondern die teilnehmerseitig gemäss Fig. 2 über einen Trennübertrager TR zusammengeschaltet sind. Die Funktionsweise dieser Anordnung ist folgende:

Wenn eine Einrichtung der genannten Art in einer Vermittlungsstelle des öffentlichen Fernsprechnetzes eine Signalisierung zu einer Teilnehmerstelle TN der Fernsprechnebenstellenanlage absetzen will, wählt sie zunächst — wie dies jeder Teilnehmer des öffentlichen Fernsprechnetzes auch tun muss — seibsttätig die Nummer dieser Nebenstellenanlage und belegt im Falle von Durchwahl demzufolge dort einen Durchwahlamtssatz DAS. Anschliessend wählt die Einrichtung statt einer bestimmten Teilnehmernummer eine Kennung in Form weiterer Ziffern. Diese Kennung wird dem Satzsteuerwerk AS—ST zugeführt, welches im Zuge der Wahlbewertung gemeinsam mit dem zentralen Steuerwerk ZS den Wunsch auf Absetzen einer Signalisierung zu einer Teilnehmerstelle der Nebenstellenanlage erkennt. Aufgrund dessen wird ein Koppelweg vom belegten Durchwahlamtssatz DAS zur Teilnehmerschaltung TSA gesucht, durchgeschaltet und die Teilnehmerschaltung TSA gerufen. Dies hat zur Folge, dass mit dem Belegen der Teilnehmerschaltung TSA der Kontakt bk schliesst und dadurch ein Schaltkreis SK einen Kontakt ba in der zugehörigen Teilnehmerleitung schliesst. Das Belegen der Teilnehmerschaltung TSA hat ein Belegen der Teilnehmerschaltung TSB durch Schliessen eines Kontaktes bb in deren Teilnehmerleitung zur Folge, worauf die Teilnehmerschaltung TSB in üblicher Weise mit einer Wahlaufnahmeeinrichtung WS verbunden wird. Die Wahlaufnahmeeinrichtung WS sendet hierauf ein Wahlaufforderungszeichen über den Weg TSB—TSA—DAS zur Einrichtung im öffentlichen Fernsprechnetz. Aufgrunddessen wählt diese Einrichtung die Rufnummer der Teilnehmerstelle TN, zu der signalisiert werden soll. Die in der Wahlaufnahmeeinrichtung WS empfangene und im Teilnehmersteuerwerk TS—ST gespeicherte Rufnummer ist mit einer weiteren Kennung ergänzt, aus welcher das Teilnehmersteuerwerk TS—ST im Zuge der Wahlbewertung mit dem zentralen Steuerwerk ZS erkennen kann, dass zum gewünschten Teilnehmeranschluss nicht eine eigentliche Sprechverbindung aufzubauen, sondern lediglich eine Signalisierung zu übertragen ist. Diese Kennung beinhaltet auch die Art der Signalisierinformation, im vorliegenden Beispiel also die Information "Nachricht wartet". Selbstverständlich sind auch Signalisierinformationen mit anderem inhalt denkbar, wie z.B. "Löschen von 'Nachricht wartet' ", wenn diese Signalisierung aufzuheben ist, weil die Nachricht vom Empfänger abgefragt worden ist oder weil sich ein Abfragen in der Zwischenzeit erübrigt hat. Es muss nun ein Signal erzeugt und der betreffenden Teilnehmerstelle TN zugeführt werden, das dort entsprechende akustische und/oder optische Anzeigevorrichtungen aktiviert bzw. inaktiviert. So kann der Teilnehmer beispielsweise durch eine aufleuchtende Anzeigelampe an seinem Teilnehmerapparat auf die wartende Nachricht in der Voice-Mail-Box aufmerksam gemacht werden.

Eine in diesem Zusammenhang anwendbare Signalisiermöglichkeit zu einer Teilnehmerstelle bietet das der europäischen Patentanmeldung Nr. 81 10 18 06.8 (Veröffentlichungsnummer 0 036 979) zugrundeliegende Signalisierverfahren, bei dem das zum Rufen der Teilnehmerstellen einer Vermittlungsanlage erzeugte Signal auch zur Signalisierung verschiedener anderer Funktionen in den Teilnehmerstellen herangezogen wird. Dabei werden bestimmte, für die einzelnen Funktionen individuell festgelegte Phasen des Rufsignales in die betreffende Teilnehmerleitung eingespeist, in der Teilnehmerstelle ausgewertet und zur Steuerung entsprechender Organe benützt.

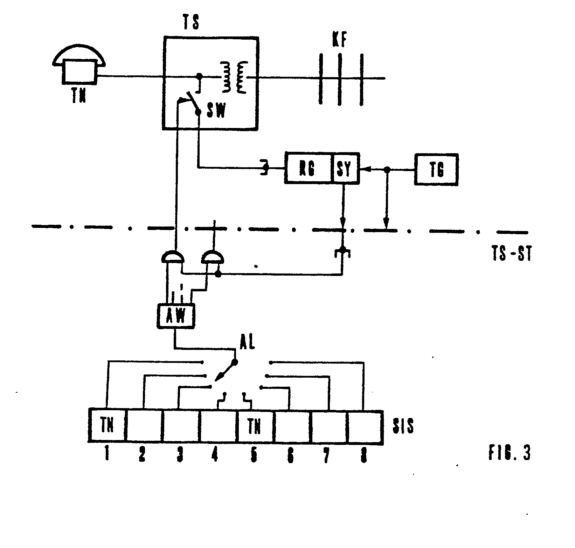

Die Teilnehmerschaltungen TS bilden das Bindeglied zwischen den Teilnehmerstellen (Teilnehmerstationen) TN und den Vermittlungseinrichtungen. Sie enthalten im wesentlichen Schaltmittel zur Speisung der zugehörigen Teilnehmerstelle TN sowie Schaltmittel zu deren galvanischen Trennung gegenüber den Vermittlungseinrichtungen. Ferner sind in den Teilnehmerschaltungen TS Mittel zur Anschaltung des Rufsignales an die zugehörige Teilnehmerleitung vorhanden. Einzelheiten zur Einspeisung des Rufsignales sind in Fig. 3 gezeigt.

Der Rufsignalstrom wird von einem Rufsignalgenerator RG geliefert, der teilnehmerindividuell über ein in der Teilnehmerschaltung TS vorgesehenes Schaltorgan SW an die Teilnehmerleitung der Teilnehmerstelle TN anschaltbar ist. Als Schaltorgan SW ist ein mechanischer oder ein elektronischer Schalter, wie beispielsweise ein gesteuerter Halbleiter, denkbar. Dem vorliegenden Ausführungsbeispiel liegt eine Rufsignalschaltung über einen Thyristor zugrunde. Die Ansteuerung des Thyristors und damit die Steuerung der Rufsignalanschaltung erfolgt durch das Teilnehmersteuerwerk TS—ST, das aufgrund von dort teilnehmerindividuell eingespeicherten Rufinformationen die Befehle "Ruf anschalten" und "Ruf abschalten" an die Teilnehmerschaltung TS abgibt.

Die Betriebsabläufe im Teilnehmersteuerwerk TS—ST unterliegen einem Systemtakt TG von beispielsweise 10 ms. Der Systemtakt TG wird neben dem Teilnehmersteuerwerk TS—ST auch einer Synchronisierschaltung SY zugeführt. Der im Prinzip freischwingende Rufsignalgenerator RG gibt einen sinusförmig pulsierenden Gleichstrom mit einer Frequenz von beispielsweise 25 Hz ab. Die Synchronisierschaltung SY erzeugt aus dem Systemtaktsignal ein impulsförmiges Triggersignal, das in Phase zum Rufsignal liegt, indem es beim Nulldurchgang des Rufsignales ausgelöst und nach einer bestimmten Dauer wieder gelöscht wird. Dieses Triggersignal wird dem Teilnehmersteuerwerk TS—ST zugeführt und gewährleistet aufgrund der zeitlichen Lage und Länge seiner impulse das sichere Zünden der Thyristoren in den Teilnehmerschaltungen TS, indem ein Befehl "Ruf anschalten" nur dann vom Teilnehmersteuerwerk TS—ST zu einer Teilnehmerschaltung TS gelangen kann, wenn die Phasenlage des Rufsignales ein ordnungsgemässes Zünden des Thyristors zulässt.

Im vorliegenden Fall wird nun das vom Rufsignalgenerator RG abgegebene Rufsignal nicht nur zum Rufen einer Teilnehmerstelle TN, sondem auch zum Signalisieren bestimmter Funktionen zu einer Teilnehmerstelle TN eingesetzt, wie beispielsweise die Anzeige der erwähnten Signalisierung "Nachricht wartet". In der betreffenden Teilnehmerstelle TN soll diese Anzeige wie erwähnt optisch erfolgen. Die Anzeige "Nachricht wartet" wird bei einer Teilnehmerstelle TN vom öffentlichen Fernprechnetz aus aktiviert, indem dieses wie beschrieben die Teilnehmerstelle TN anruft.

Die zur Signalisierung in einer Teilnehmerstelle notwendigen Informationen (Nummer der Teilnehmerstelle und Art der Signalisierung) werden jeweils aus den in der Wahlaufnahmeeinrichtung WS eintreffenden Daten aufbereitet und hierauf einem Signalisierinformationsspeicher SIS zugeführt und dort solange festgehalten, wie die Signalisierung aufrechterhalten werden soll. Dieser Speicher kann im Teilnehmersteuerwerk TS—ST vorgesehen werden. Die Signalisierung geschieht in der Weise, dass einer Teilnehmerstelle ausgewählte, der bestimmten Signalisierung zugeordnete Perioden des Rufsignales aus dem Rufsignalgenerator RG über die zugehörige Teilnehmerschaltung TS zugeführt werden. Die Teilnehmerstelle TN, zu der signalisiert werden soll, weist Schaltmittel zum Empfang und zur Auswertung der eintreffenden Start- und Signalisierinformationen sowie zur Aktivierung der entsprechenden Anzeigeorgane auf.

Es soll hier anhand von Fig. 3 noch auf Einzelheiten der erfindungsgemässen Einspeisung des vom Rufsignalgenerator RG abgegebenen Signales sowohl zum Rufen als auch zum Signalisieren in einer Teilnehmerstelle TN eingegangen werden. Der erwähnte Signalisierinformationsspeicher SIS weist eine der Anzahl der für die Signalisierung vorgesehenen Signalperioden des Rufsignales entsprechende Anzahl von Speicherplätzen auf, im vorliegenden Beispiel acht Speicherplätze. Der inhalt dieser acht Speicherplätze wird bei der angenommenen Rufsignalfrequenz von 25 Hz in Abständen von 40 ms aufeinanderfolgend von einem Ausleseorgan AL ausgelesen. Dementsprechend kann der Signalisierinformationsspeicher SIS als Umlaufspeicher ausgebildet sein, dessen Umlaufzeit der Zeitspanne entspricht, mit der sich die Signalisierung wiederholt. In den Speicherplätzen sind jeweils in einer die Signalisierinformation kennzeichnenden Reihenfolge die Nummern derjenigen Teilnehmerstellen eingetragen, zu denen signalisiert werden soll. In Fig. 3 ist eine Belegungsmöglichkeit des Signalisierinformationsspeichers SIS angegeben. In dem aus acht Speicherplätzen bestehenden gezeigten Speicherteil ist für eine Teilnehmerstelle TN die Signalisierinformation "Nachricht wartet" eingetragen, indem sowohl in einem der Startinformation zugeordneten Speicherplatz als auch in dem der Signalperiode 5 des Rufsignals zugeordneten Speicherplatz die Nummer dieser Teilnehmerstelle TN eingetragen ist. Gemäss Fig. 3 liegen zwischen den beiden für die Teilnehmerstelle TN belegten Speicherplätzen 1 und 5 die weiteren Speicherplätze 2 bis 4 und 6 bis 8, die an sich für andere Signalisierungen verfügbar sind. Um eine gleichzeitige Signalisierung zu mehr als einer Teilnehmerstelle zu ermöglichen, kann der Signalisierinformationsspeicher SIS mit weiteren Speicherteilen ergänzt werden, deren Speicherplätze mit der gleichen Ordnungszahl jeweils gleichzeitig ausgelesen werden.

Eine vom Ausleseorgan AL ausgelesene Teilnehmernummer gelangt in eine Auswerteeinheit AW, von wo aus über eine UND-Verknüpfung das Schaltorgan SW in der betreffenden Teilnehmerschaltung TS angesteuert wird. Die UND-Verknüpfung wird von der Auswerteeinheit AW solange mit einem impuls beaufschlagt, wie das Ausleseorgan AL auf dem entsprechenden Speicherplatz steht. Trifft nun während dieser Zeitspanne ein Triggerimpuls aus der Synchronisierschaltung SY am anderen Eingang der UND-Schaltung ein, dann gibt diese einen impuls zur zugehörigen Teilnehmerschaltung TS ab, der als Rufbefehl auf die Steuerelektrode des Rufeinspeisethyristors gelangt und diesen zündet. Demzufolge gelangt eine Periode des Rufsignals über die Teilnehmerleitung zur Teilnehmerstelle TN. Der Thyristor löscht selbsttätig, sobald die Amplitude des Rufsignals einen bestimmten Wert unterschreitet. Eine nächste Rufperiode des Rufsignals wird erst dann wieder in die Teilnehmerleitung eingespeist, wenn aus dem Teilnehmersteuerwerk TS—ST ein neuer Rufbefehl auf die Steuerelektrode des Thyristors gelangt. Dies ist für die Teilnehmerstelle TN erst nach Ablauf von 120 ms wieder der Fall, indem 120 ms nach der die Startinformation kennzeichnenden Periode 1 die die gewünschte Signalisierung kennzeichnende Periode 5 des Rufsignals einzuspeisen ist. Beim normalen Rufen eines Teilnehmers wird das Rufsignal selbstverständlich ununterbrochen solange in die Teilnehmerschaltung eingespeist, bis der angerufene Teilnehmer sich meldet oder der Anruf abgebrochen wird.

Die in der beschriebenen Art und Weise zu einer Teilnehmerstelle TN gelangenden Signalisierinformationen müssen dort erkannt und ausgewertet werden, damit die entsprechenden Anzeigeorgane aktiviert werden können. Einzelheiten hiezu finden sich in der erwähnten europäischen Patentanmeldung, weshalb hier nicht weiter darauf eingegangen wird.

Sobald die gewünschte Signalisierung im Signalisierinformationsspeicher SIS eingetragen ist, wird die vom öffentlichen Fernsprechnetz über den Weg DAS—TSA—TSB zur Wahlaufnahmeeinrichtung WS führende Verbindung wieder ausgelöst. Die Wahlaufnahmeeinrichtung WS und der Durchwahlamtssatz DAS sind für neue Verbindungswünsche verfügbar. Das Anzeigeorgan in der betreffenden Teilnehmerstelle TN bleibt aktiviert, bis entweder der Teilnehmer die wartende Nachricht durch Anruf der Voice-Mail-Box abgefragt hat oder die Signalisierung "Nachricht wartet" vom öffentlichen Fernsprechnetz her aufgehoben worden ist. In beiden Fällen erfolgt die Inaktivierung des Anzeigeorganes von der Einrichtung im öffentlichen Fernsprechnetz aus.

Obwohl die vorstehende Beschreibung der Erfindung auf deren Anwendung in einer Durchwahlamtssätze aufweisenden Nebenstellenanlage basiert, kann die Erfindung auch eingesetzt werden, wo keine Möglichkeit zur Durchwahl vom öffentlichen Fernsprechnetz her besteht. In diesem Fall ist ein Amtsverbindungssatz AS bereitzustellen, dem fest eine Teilnehmerschaltung zugeordnet ist und der ausschliesslich dem Absetzen von Signalisierungen aus dem öffentlichen Fernsprechnetz dient. Dem Amtsverbindungssatz AS ist dementsprechend auch eine spezielle Rufnummer zugeordnet, nach deren Wahl durch die Einrichtung im öffentlichen Fernsprechnetz der Amtsverbindungssatz AS belegt und hierauf nicht wie üblicherweise mit der Abfragestelle der Nebenstellenanlage, sondern unter Mitwirkung des Satz-Steuerwerkes AS—ST mit der Teilnehmerschaltung TSA verbunden wird, worauf die weiteren Vorgänge wie beschrieben ablaufen.

**Patentansprüche**

1. Schaltungsanordnung zur Uebertragung von Signalisierinformationen vom öffentlichen Fernsprechnetz zu Teilnehmerstellen einer Fernmelde-, insbesondere Fernsprechnebenstellenanlage, mit einem Koppelnetzwerk (KF), auf dessen einen Seite Teilnehmeranschlussschaltungen (TS) und auf dessen anderen Seite Leitungssätze (AS, DAS) für Ver kehr von und zum öffentlichen Fernsprechnetz sowie Wahlaufnahmeeinrichtungen (WS) angeschlossen sind, dadurch gekennzeichnet, dass in der Nebenstellenanlage neben den in üblicher Weise je mit einer Teilnehmerstelle (TN) verbundenen Teilnehmeranschlussschaltungen (TS) mindestens zwei weitere Teilnehmeranschlussschaltungen (TSA, TSB) vorgesehen sind, deren teilnehmerseitige Anschlüsse wechselstrommässig direkt miteinander verbunden sind, dass ferner mindestens eine Wahlaufnahmeeinrichtung (WS), die nebst den von Teilnehmerstellen (TN) abgegebenen Wahlinformationen auch Signalisierinformationen empfangen kann, und mindestens ein Leitungssatz vorhanden sind, der bei Belegung durch einen Anruf zwecks Empfang einer Signalisierinformation mit der einen weiteren Teilnehmeranschlussschaltung (TSA) verbindbar ist, welche dabei selbsttätig in den Belegtzustand übergeht und dabei die andere weitere Teilnehmeranschlussschaltung (TSB) ebenfalls in den Belegtzustand versetzt, worauf diese mit einer Wahlaufnahmeeinrichtung (WS) verbunden wird, die hierauf in bekannter Weise ein Wahlaufforderungssignal abgibt, das über die aufgebaute Verbindung (WS—TSB—TSA-Leitungssatz) zum öffentlichen Fernsprechnetz gelangt und dort die Aussendung der anstehenden Signalisierinformation veranlasst, welche in der Wahlaufnahmeeinrichtung (WS) empfangen und nach ihrer Auswertung der betreffenden Teilnehmerstelle (TN) zugeführt wird.

2. Schaltungsanordnung nach Patentanspruch 1, dadurch gekennzeichnet, dass es sich beim Leitungssatz um einen Durchwahlamtssatz (DAS) handelt.

3. Schaltungsanordnung nach Patentanspruch 1, dadurch gekennzeichnet, dass es sich beim Leitungssatz um einen Amtsverbindungssatz (AS) handelt, dem eine spezielle Rufnummer zugeordnet ist.

4. Schaltungsanordnung nach einem der vorangehenden Patentansprüche, dadurch gekennzeichnet, dass zwecks Erzeugung der einer Teilnehmerstelle (TN) zuzuführenden Signalisierinformationen aus dem Rufsignal ein Speicher (SIS) vorgesehen ist, der mindestens eine der Anzahl der für die Signalisierung insgesamt herangezogenen Perioden des Rufsignals entsprechende Anzahl von Speicherplätzen aufweist, die zyklisch aufeinanderfolgend ausgelesen werden, wobei die gesamte Auslesezykluszeit gleich der gesamten Dauer der genannten Anzahl Rufsignalperioden ist, dass die Speicherplätze des Speichers (SIS) entsprechend der in der Wahlaufnahmeeinrichtung (WS) empfangenen Signalisierinformationen mit die zu signalisierenden Teilnehmerstellen (TN) kennzeichnenden Informationen belegbar sind, bei deren Auslesen bestimmte Perioden des Rufsignales an die betreffenden Teilnehmerstellen (TN) angeschaltet werden und dass in den Teilnehmerstellen (TN) eine Empfangs und Auswerteeinrichtung vorhanden ist, die die eintreffenden Signalisierinformationen zu interpretieren vermag und die Auslösung der signalisierten Funktionen in der Teilnehmerstelle (TN) veranlasst.

**Revendications**

1. Montage pour la transmission d'informations de signalisation du réseau téléphonique public à des postes d'abonnés d'une installation téléphonique, notamment d'une installation téléphonique à postes supplémentaires, avec un réseau de couplage (KF), sur un côté duquel sont reliés des circuits de lignes d'abonnés (TS) alors que sur son autre côté sont reliés des circuits de lignes (AS, DAS) pour le trafic provenant du réseau téléphonique et y menant, ainsi que des dispositifs (WS) susceptibles de recevoir des sélections, caractérisé par le fait que sont prévus, dans l'installation téléphonique à postes supplémentaires, en plus des circuits de raccordement des lignes d'abonnés (TS), reliés chacun de la façon habituelle à un poste d'abonné (TN), au moins deux circuits de raccordement supplémentaires (TSA, TSB) dont les raccordements, côté abonné, sont reliés directement entre eux du point de vue du courant alternatif, qu'il est prévu, en outre, au moins un dispositif de réception de sélection (WS) capable de recevoir, en plus des informations de sélection émises par les postes d'abonnés (TN), également des informations de signalisation, ainsi qu'au moins un circuit de ligne qui, lors de l'occupation par un appel, est susceptible, en vue de la réception d'une information de signalisation, d'être relié à l'un (TSA) desdits circuits de raccordement supplémentaires, qui passe automatiquement dans son état d'occupation et, se faisant, place l'autre (TSB) desdits circuits de raccordement supplémentaires, également dans son état d'occupation, après que ce dernier est relié à un dispositif de réception de sélection (WS) qui émet, de façon connue, un signal de demande de sélection qui parvient, par la liaison établie (WS—TSB—TSA-circuit de ligne), au réseau téléphonique public et y provoque l'émission de l'information de signalisation qui est à disposition, qui est reçue dans le dispositif de réception de sélection (WS) et qui est amenée, après son évaluation, au poste d'abonné (TN) concerné.

2. Montage selon la revendication 1, caractérisé par le fait que le circuit de ligne est constitué par un circuit d'appel direct de central.

3. Montage selon la revendication 1, caractérisé par le fait que le circuit de ligne est constitué par un circuit de liaison de central (AS), auquel est affecté un numéro d'appel spécial.

4. Montage selon l'une des revendications précédentes, caractérisé par le fait que pour produire à partir du signal d'appel des informations de signalisation à acheminer à un poste d'abonné, il est prévu une mémoire (SIS) qui comporte au moins un nombre d'emplacements de mémoire qui correspond au nombre des périodes du signal d'appel utilisées au total pour la signalisation, la durée totale du cycle de lecture étant égale à la durée totale dudit nombre de périodes des signaux d'appel, que les emplacements de mémorisation de la mémoire (SIS) sont susceptibles, en fonction des informations de signalisation reçues dans le dispositif de réception de sélection (WS), d'être occupés par les informations qui caractérisent les postes d'abonnés (TN) à signaler et lors de la lecture desquels certaines périodes du signal d'appel sont appliquées aux postes d'abonnés (TN), et que dans les postes d'abonnés est prévu un dispositif de réception et d'évaluation capable d'interpréter les informations de signalisation d'entrée et de déclencher les fonctions signalées dans le poste d'abonné.

## Claims

1. A circuit for transmitting items of signalling information from a public telephone network to the subscriber stations of a telecommunications system — in particular a telephone PBX-system, comprising a coupling network (KF) having subscriber trunk circuits (TS) arranged on one side and trunk circuits (AS, DAS) arranged on the other side for traffic to and from the public telephone network and dialling receiving devices (WS), characterised in that in the PBX system, in addition to the subscriber trunk circuits (TS) which are each connected in customary fashion to a subscriber station (TN), there are provided at least two further subscriber trunk circuits (TSA, TSB) whose subscriber-side terminals are directly connected to one another in respect of a.c., that moreover there are provided at least one dialling receiving device (WS), to receive not only the items of dialling information emitted from the subscriber stations (TN) but also items of signalling information, and at least one trunk circuit, which latter, when seized by a call for the reception of an item of signalling information, can be connected to the first further subscriber trunk circuit (TSA) which thereby automatically assumes the seized state and thereby likewise brings the other further subscriber trunk circuit (TSB) into the seized state, whereupon the latter is connected to a dialling receiving device (WS) which thereupon emits a dialling request signal, in a manner known per se, which passes via the established connection (WS, TSB, TSA trunk circuit) to the public telephone network where it causes the awaiting item of signalling information to be transmitted, which item of signalling information is received in the dialling receiving device (WS) and, having been analysed, is supplied to the respective subscriber station (TN).

2. A circuit arrangement as claimed in Claim 1, characterised in that the trunk circuit is a direct inward dialling trunk circuit (DAS).

3. A circuit arrangement as claimed in Claim 1, characterised in that the trunk circuit is an exchange connection trunk circuit (AS) which is assigned a special subscriber number.

4. A circuit arrangement as claimed in one of the preceding Claims, characterised in that in order to generate from the ringing signal the items of signalling information which are to be supplied to a subscriber station (TN), a store (SIS) is provided which contains a number of storage positions at least equal to the total number of periods of the ringing signal used for the signalling, which storage positions are read in cyclic succession, where the total read-out cycle time is equal to the total duration of the aforementioned number of ringing signal periods, that the storage positions of the store (SIS) can be supplied with items of information which characterise the subscriber stations (TN) which are to be signalled in accordance with the signalling information items received in the dialling receiving device (WS), and which, when read-out, cause specific periods of the ringing signal to be connected to the respective subscriber stations (TN), and that the subscriber stations (TN) contain a receiving and analysis device capable of interpreting the incoming items of signalling information, which triggers the signalled functions in the subscriber station (TN).

FIG.1

FIG.2

FIG. 3